# EUROPÄISCHE PATENTSCHRIFT

(11) **EP 1 985 907 B1**
(45) Veröffentlichungstag und Bekanntmachung des Hinweises auf die Patenterteilung: **18.11.2009**
(21) Anmeldenummer: 08006258.1
(22) Anmeldetag: 31.03.2008
(51) Int. Cl.: F16L 37/23

(54) **Schnellverschlusskupplung**
Quick lock coupling
Couplage de fermeture rapide

(30) Priorität: 26.04.2007 DE 202007006090 U
(43) Veröffentlichungstag der Anmeldung: 29.10.2008
(73) Patentinhaber: TEMA Marketing AG, 6300 Zug (CH)
(72) Erfinder: Scheytt, Alexander, 75428 Illingen (DE)
(74) Vertreter: Richter, Werdermann, Gerbaulet & Hofmann

(56) Entgegenhaltungen:
- EP-A- 1 729 051
- DE-B- 1 119 067
- GB-A- 2 234 566
- US-A- 2 854 259
- US-A- 5 056 560

## Beschreibung

Die Erfindung betrifft eine Schnellverschlusskupplung zur Kupplung von Schlauch- und Rohrleitungen, insbesondere zur Verwendung bei der Formenkühlung, mit einem einen Befestigungsansatz für Schläuche oder Rohre, ggf. mit einem Außen- oder Innengewinde, aufweisenden Kupplungsteil, der innerhalb einer Entriegelungshülse axial verschiebbar gelagert ist, mit einem innerhalb der Entriegelungshülse angeordneten Ventil, das innerhalb der Entriegelungshülse entgegen der Federkraft einer Druckfeder durch ein Steckerteil verschiebbar gelagert ist, wobei das Kupplungsteil wenigstens ein Rastelement (6) zur Kupplung des Kupplungsteiles an dem Steckerteil umfasst, so dass das Kupplungsteil mit dem Steckerteil in einer gekuppelten Stellung fest gekuppelt ist und durch eine axiale Bewegung der Entriegelungshülse das Steckerteil entkuppelt wird, wobei die Entriegelungshülse mit einer Führungsnut versehen ist, die einen am Außenumfang des Kupplungsteil befestigten zylinderscheibenförmiger Führungszapfen derart führt, dass eine zusätzliche Drehbewegung der Entriegelungshülse notwendig ist, um das Steckerteil zu entriegeln.

Bekannt sind Lösungen, bei denen die Kupplung entriegelt wird, wenn die Entriegelungshülse manuell axial bewegt wird, so dass das Steckerteil entriegelt wird und dieses aus der gekuppelten Stellung herausbewegt werden kann.

Bei dieser Schnellverschlusskupplung kann es jedoch vorkommen, dass eine ungewollte axiale Verschiebung der Entriegelungshülse stattfindet. Dies kann zum Beispiel leicht durch Ziehen der Kupplung über Hindernisse entstehen.

Aus der US 2,854,259 ist eine Schnellkupplung der eingangs genannten Art bekannt, die zum Entkuppeln eine zusätzliche Drehbewegung benötigt. Eine Entriegelungshülse steht dabei mit einem Zapfen in funktionellem Zusammenhang. Der Zapfen ist am Außenumfang eines Kupplungsteiles angeordnet. Die Entriegelungshülse hat im Bereich des Zapfens eine breite Aussparung am Rand der Entriegelungshülse. Entlang dieser Aussparung lässt sich der Zapfen nur relativ zur Hülse radial bewegen. Die Drehbewegung ist im Wesentlichen durch die Breite des Ausschnitts begrenzt. An einer Seite des Ausschnitts liegt eine Vertiefung, in die der Zapfen eintauchen kann, so dass eine Arretierung in dieser Position möglich ist. Die Hülse muss bei dieser Lösung zuerst gedreht werden, und zwar entgegen der Wirkung einer Feder. Erst dann ist eine axiale Verschiebung eines Steckteils möglich. Funktioniert diese Feder jedoch nicht einwandfrei, kann sich die Hülse leicht unbeabsichtigt drehen. Eine ungewollte Entkupplung ist somit weiterhin möglich. Zudem hat der Zapfen keine Montagefunktion. Die benötigte Befestigungskonstruktion bezüglich der drehbaren Hülse ist daher aufwändig.

Aus der deutschen Auslegeschrift 1 119 067 ist eine Steckkupplung mit einem Führungszapfen und einer schräg verlaufenden Führungsbahn bekannt, die als Verschiebesicherung wirken.

Der Erfindung liegt die Aufgabe zugrunde, die Schnellverschlusskupplung so zu verbessern, dass ein ungewolltes Entriegeln der Schnellverschlusskupplung durch eine unbeabsichtigte axiale Verschiebung der Entriegelungshülse verhindert wird.

Diese Aufgabe wird durch eine Schnellverschlusskupplung mit den kennzeichnenden Merkmalen des Anspruches 1 in Verbindung mit seinen Oberbegriffsmerkmalen gelöst.

Die Erfindung beruht auf den Gedanken, die Kupplung so auszugestalten, dass neben einer axialen Verschiebung der Entriegelungshülse eine zusätzliche Drehbewegung der Entriegelungshülse erforderlich ist, damit das Steckerteil in der gekuppelten Stellung entriegelt wird und entkuppelt werden kann.

Daher ist erfindungsgemäß die Entriegelungshülse mit einer Führungsnut versehen, die ein am Kupplungsteil angeordneten Führungselement derart führt, dass die zusätzliche Drehbewegung der Entriegelungshülse notwendig ist, um das Steckerteil zu entriegeln.

Auf diese Weise wird in einfacher Weise verhindert, dass die Entriegelungshülse ungewollt betätigt wird, wenn zum Beispiel die Kupplung über Hindernisse gezogen wird. Bei einem solchen Vorgang ist es sehr unwahrscheinlich, dass die Entriegelungshülse zusätzlich gedreht wird, und zwar auch noch in der richtigen Bewegungsreihenfolge. Somit ist die erfindungsgemäße Schnellverschlusskupplung nur manuell entriegelbar. Eine Einhandbedienung ist sehr komfortabel.

Durch die Erfindung wird praktisch eine Sicherheitsveniegelung geschaffen, und zwar ohne dass eine Änderung des Konstruktionsprinzips der Kupplung erforderlich wäre. Die Führungsnut sowie das Entriegelungselement zur notwendigen Durchführung der zusätzlichen Drehbewegung können ohne viel Aufwand in vorhandene Teile, nämlich der vorhandenen Entriegelungshülse und dem vorhandenen Kupplungsteil, eingearbeitet werden. Die Produktionskosten sind daher gering.

Anwendbar ist die Erfindung vorzugsweise auf Schnellverschlusskupplungen mit Einhandbedienung. Ebenfalls ist die Erfindung auch auf Schnellverschlusskupplungen mit Zweihandbedienungen anwendbar.

Weiterhin ist vorgesehen, dass die Führungsnut aus einem axial verlaufenden ersten Abschnitt und einen hierzu schräg, d.h. unter einem Winkel zur Kupplungslängsachse verlaufenden zweiten Abschnitt besteht. Das Führungselement wird durch beide Abschnitte geführt, und zwar so, dass das Führungselement bei der axialen Bewegung der Entriegelungshülse innerhalb des ersten Abschnitts bewegt wird und bei der zusätzliche Drehbewegung innerhalb des zweiten Abschnitts geführt wird. Durch den ersten axialen Abschnitt kann ein Steckerteil, wie gewohnt, in die Kupplung eingesteckt werden. Hierbei lässt sich das Führungselement, das als Führungszapfen ausgeführt ist, axial bewegen. In der teilweise gekuppelten Stellung wird die Entriegelungshülse, die natürlich auch zur Verriegelung vorgesehen ist bzw. auch eine Ent- und Verriegelungshülse ist, so gedreht, dass keine axiale Verschiebung des Führungszapfens mehr möglich ist. Der Führungszapfen findet in der Führungsnut einen Anschlag. Daher lässt sich die Entriegelungshülse in der voll gekuppelten Stellung nicht axial verschieben. Vorher muss die Hülse manuell gedreht werden. Erst nachdem diese Drehbewegung erfolgt ist, wird der Zapfen freigegeben.

Um eine möglichst einfache Montage der Einzelteile der Kupplung bewerkstelligen zu können, ist erfindungsgemäß vorgesehen, dass der zweite Abschnitt zum Befestigungsansatz hin eine Öffnung hat, durch die das Führungselement von außen gesteckt werden kann, wobei die Öffnungsbreite der Öffnung so breit ist, dass die Entriegelungshülse auf dem Kupplungsteil noch montierbar ist. Die zum Rand hin offene Führungsnut erlaubt ein Einführen des Zapfens, so dass der Zapfen fester Bestandteil des Kupplungsteiles sein kann. Der Zapfen kann zum Beispiel fest an dem Kupplungsteil angeformt sein, was für geringe Montagekosten sorgt.

Erfindungsgemäß ist das Führungselement als ein am Außenumfang des Kupplungsteiles befestigter zylinderscheibenförmiger Zapfen ausgeführt. Hierbei ist die Führungsnut an der Oberfläche der Hülse offen ausgebildet. Das bedeutet, dass kein Hülsenmaterial im Bereich der Nut vorhanden ist. Die Nut wird durch einen Einschnitt in das Hülsenmaterial geschaffen. Durch die Zylinderform lässt sich der Zapfen leicht führen, wobei der Zapfen auch aus der Hülse radial nach außen hin herausragen kann.

Nach einer vorteilhaften Weiterbildung der Erfindung kann vorgesehen sein, dass das Führungselement als eine am Außenumfang des Kupplungsteils angeordnete Kugel oder Halbkugel ausgeführt ist. Hierbei wird die Kugel beispielsweise in eine Sacklochbohrung verstemmt oder als Halbkugel auf der Außenoberfläche des Kupplungsteils ausgebildet.

In einer vorteilhaften Weiterbildung der erfindungsgemäßen Kupplung ist weiterhin vorgesehen, dass der zweite Abschnitt in der Nähe der Öffnung in axialer Richtung verbreitert ist, so dass das Führungselement in der gekuppelten Stellung ein axiales Spiel hat. Durch dieses Spiel ist der Zapfen geringfügig in der gekuppelten Stellung axial verschiebbar. Dadurch ist ein sehr sanfter Übergang in die Drehbewegung der Hülse möglich. Durch diese Maßnahme spürt man außerdem einen leichten Widerstand, wenn die Hülse gedreht werden soll, so dass man den Entriegelungsvorgang sehr bewusst wahrnimmt.

Wenn die Entriegelungshülse im Bereich der Führungsnut eine erste Strukturoberfläche aufweist und im Abstand dazu eine zweite ringförmige Strukturoberfläche aufweist, wobei beide Strukturoberflächen in einem Bereich mit vergrößertem Hülsendurchmesser und vergrößerter Hülsenwandstärke angeordnet sind, hat das mehrere Vorteile. Zum einen lässt sich die Kupplung sehr leicht und sicher handhaben. Beide Oberflächen mit der strukturierten, hervorgehobenen Oberfläche, zum Beispiel mit prismenartigen Erhebungen, kann man gut greifen. Zum anderen steht für den Zapfen eine verbreiterte Führungswand zur Verfügung, wobei die Hülse trotz Materialschwächung im Bereich der Führungsnut noch hinreichend stabil ist. Im Bereich der Führungsnut steht eine dickere Wandstärke zur Verfügung.

In einer weiteren bevorzugten Weiterbildung der Erfindung umfasst das Kupplungsteil einen Verriegelungsabschnitt. Dieser liegt in der gekuppelten Stellung zwischen der Entriegelungshülse und dem Steckerteil, und zwar radial gesehen. In dem Verriegelungsabschnitt liegen mehrere Rastelemente vor. Diese sind insbesondere als Rastkugeln ausgeführt, die im Verriegelungsabschnitt eingebettet sind, so dass sie radial nach innen herausragen. Außerdem ist am Steckerteil an dessen Außenumfang wenigstens eine Rastvertiefung bzw. eine Verriegelungsrille ausgebildet, und zwar für die Rastkugeln, Dadurch können die Rastkugeln in der gekuppelten Stellung formschlüssig in die Rille greifen, so dass die Kupplung verriegelt ist. Die Rille ist daher so vorteilhaft, da die Kugeln innerhalb der Rille sich bewegen können, um die zusätzliche Drehbewegung nicht zu behindern. Die Kugeln drehen sich also innerhalb der Rille.

Vorteilhaft ist zudem, wenn an dem Verriegelungsabschnitt an seiner Innenfläche eine weitere Rille für eine O-Ringdichtung vorhanden ist. Die Dichtung liegt vorzugsweise in der gekuppelten Stellung an einer radial nach innen gewölbten Außenkontur des Steckerteiles. Dadurch wird eine gute Abdichtung gewährleistet.

Damit eine Entriegelung der Kupplung durch Betätigung der Entriegelungshülse überhaupt möglich ist, ist es besonders vorteilhaft, dass die Entriegelungshülse unter der Wirkung einer zweiten, an dem Kupplungsteil abgestützten Druckfeder steht. Die zweite Druckfeder steht mit der ersten Druckfeder für das Ventil in Wirkverbindung, und zwar so, dass wenn eine Feder gespannt ist, die andere entspannt ist. Bei der axialer Bewegung der Entriegelungshülse sind - entgegen der Federkraft der zweiten Druckfeder - die Rastelemente in einem abgeschrägten Kantenbereich eines Hülsenendes radial nach außen bewegbar. In dieser Stellung ist das Steckerteil entriegelt. Durch die Federkraft dieser Feder versucht die Entriegelungshülse stets sich axial in Richtung Steckerteil zu bewegen. Um eine Entkupplung zu erreichen, muss man an der Hülse entgegen der Federkraft ziehen. Damit aber das Kupplungsteil mit der Hülse, die eine Außenhülse ist, verbunden bleibt, trägt bevorzugterweise das Kupplungsteil an einem dem Steckerteil nahen Ende ein ringförmiges Anschlagelement. Dieses Element ist insbesondere in einer Außennut des Kupplungsteiles eingebettet. Es ist daher einfach montierbar, und zwar nachdem Hülse und Kupplungsteil ineinander gefügt worden sind. In der gekuppelten Stellung schlägt das Anschlagelement bzw. der Anschlagring an einer Anschlagfläche der Entriegelungshülse an. Insbesondere schlägt dieser an einem abgeschrägten Kantenbereich der Hülse an.

Weitere vorteilhafte Ausgestaltungen der Erfindung sind in den Unteransprüchen gekennzeichnet.

Ein Ausführungsbeispiel wird anhand der Zeichnungen näher erläutert, wobei weitere vorteilhafte Weiterbildungen der Erfindung und Vorteile derselben beschrieben sind. Es zeigen in schematischer Darstellung:
Fig. 1 in einer Draufsicht eine Schnellkupplungsvorrichtung in einem ungekuppeltem Zustand,
Fig. 2 die Schnellkupplungsvorrichtung in einer gekuppelten Stellung,
Fig. 3 eine perspektivische Darstellung der Schnellkupplungsvorrichtung in dem ungekuppelten Zustand, und
Fig. 4 eine perspektivische Darstellung der Schnellkupplungsvorrichtung in der gekuppelten Stellung.

In den Figuren sind gleiche Teile mit denselben Bezugszeichen versehen.

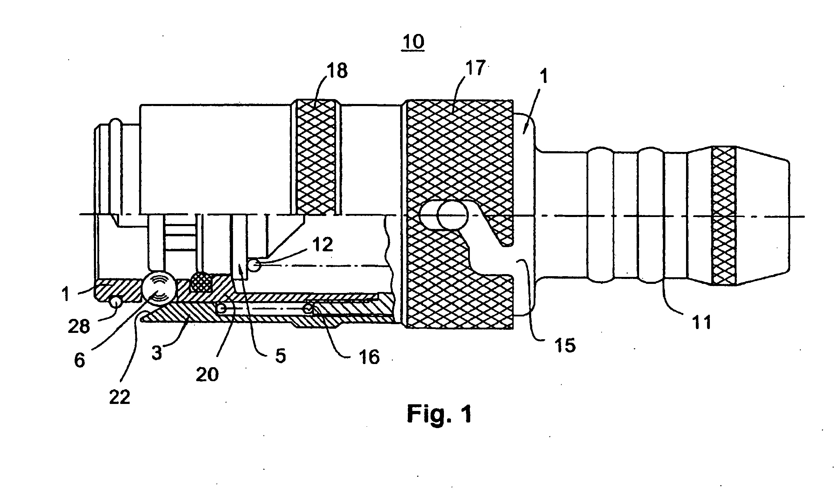

Fig. 1 veranschaulicht eine bevorzugte Ausführungsform einer erfindungsgemäßen Schnellkupplungsvorrichtung 10. Diese dient zur Kupplung von Schlauch- und Rohrleitungen zur Verwendung bei der Formenkühlung. Bei Spritzgussverfahren zum Beispiel müssen die Formen mit Hilfe eines Kühlmittels gekühlt werden. Kühlleitungen können mit Hilfe der Kupplung angeschlossen werden.

Das folgende Beispiel zeigt die Erfindung einer Ausführungsform der Schnellverschlusskupplungen mit Einhandbedienung.

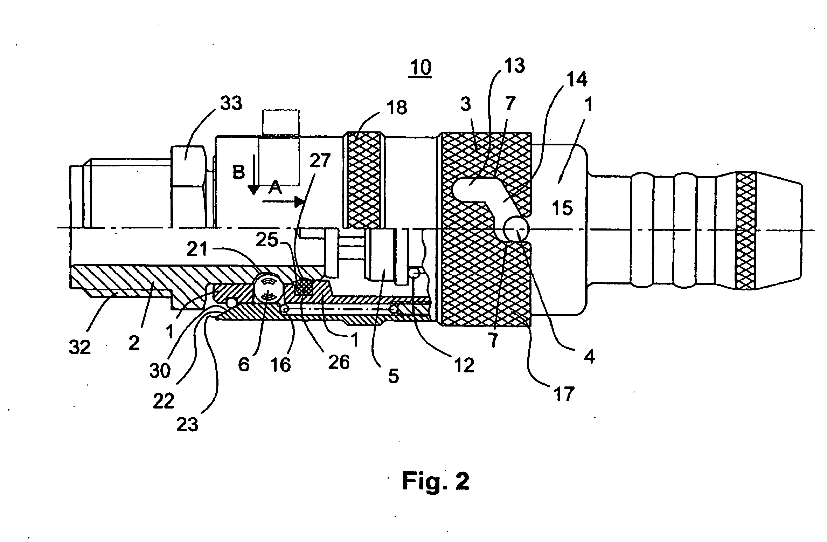

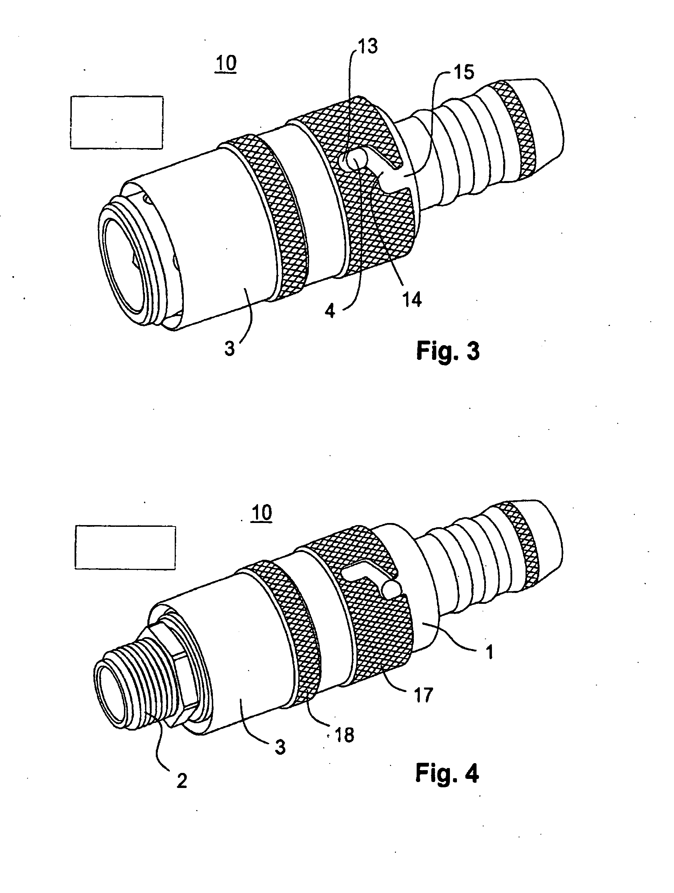

Die Schnellkupplungsvorrichtung 10 umfasst ein Kupplungsteil 1. Dieser trägt einen Befestigungsansatz 11, der rechts in der Figur zu sehen ist. Der Ansatz 11 dient zum Anschluss eines nicht gezeigten Kühlschlauchs. Das Kupplungsteil 1 ist innerhalb einer Entriegelungshülse 3 axial verschiebbar gelagert. Die Hülse 3 umhüllt einen wesentlichen Teil des Kupplungsteiles. Ein Bereich, der sich in der Entriegelungshülse befindet, ist im Schnitt bzw. im linken Teil der Fig. 1 gezeigt. Innerhalb der Entriegelungshülse bzw. innerhalb des Kupplungsteiles 1 ist ein Ventil 5 angeordnet. Dieser ist innerhalb der Entriegelungshülse 3 entgegen der Federkraft einer Druckfeder 12 verschiebbar und kann durch ein Steckerteil 2, das in den Figuren 2 und 4 abgebildet ist, verschoben bzw. axial bewegt werden. Das Ventil 5 ist also verschiebbar gelagert.

Das Kupplungsteil 1 hat mehrere Rastelemente 6, insbesondere Rastkugeln 6 zur Kupplung des Kupplungsteiles an dem Steckerteil 2, so dass das Kupplungsteil 1 mit dem Steckerteil in einer gekuppelten Stellung fest gekuppelt ist. Wie dies im Einzelnen realisiert ist, wird später erläutert.

Durch eine axiale Bewegung der Entriegelungshülse 3 wird das Steckerteil entkuppelt. Die Fig. 2 zeigt die gekuppelte Stellung, bei der das Steckerteil 2 verriegelt ist. In Fig. 2 ist ein Pfeil A dargestellt. Dieser veranschaulicht die axiale Bewegung der Entriegelungshülse 3, um die Entkupplung des Steckerteils herbeizuführen. Die relevanten Bereiche sind im Schnitt dargestellt und werden ebenfalls noch ausführlicher erläutert.

Erfindungsgemäß ist die Entriegelungshülse 3 mit einer Führungsnut 7 versehen. Die Führungsnut 7 führt ein am Kupplungsteil 1 angeordnetes Führungselement 4. Das Führungselement 4 ist vorzugsweise ein Führungszapfen. Die Nut 7 führt den Zapfen derart, dass eine zusätzliche Drehbewegung der Entriegelungshülse 1 notwendig ist, um das Steckerteil 2 zu entriegeln. In Fig. 2 ist weiterhin ein Pfeil B abgebildet. Dieser verdeutlicht die notwendige Drehbewegung, die vor der axialen Bewegung (Pfeil A) manuell durchzuführen ist.

Erfindungswesentlich ist also die zusätzliche Führungsnut 7 mit dem Führungselement 4 bzw. dem Zapfen 4 im Bereich der Entriegelungshülse 3. Diese Anordnung verhindert durch die zusätzlich notwendige Drehbewegung ein ungewolltes Entriegeln durch eine axiale Verschiebung, wie sie z.B. leicht durch Ziehen der Kupplung über Hindernisse entstehen kann.

Die Führungsnut 7 besteht aus einem axial verlaufenden ersten Abschnitt 13 und einen hierzu schräg verlaufenden zweiten Abschnitt 14 besteht, wie zum Beispiel die Figuren 2 und 3 zeigen. Beim Ver- und Entriegeln wird der Zapfen 4 durch den ersten Abschnitt 13 und dem zweiten Abschnitt 14 geführt.

Das Führungselement 4 wird bei der axialen Bewegung der Entriegelungshülse, die durch den Pfeil A angedeutet ist, was einem Zeihen der Hülse 3 entspricht, innerhalb des ersten Abschnitts 13 bewegt.

Durch den schräg verlaufenden Abschnitt 14 führt die Entriegelungshülse 3 zusätzlich zur Drehbewegung eine weitere axiale Bewegung aus.

Ist die Vorrichtung 10, wie in Fig. 3 gezeigt ist, in einer ungekuppelten Stellung, dann muss zuerst die Hülse 3 axial verschoben werden bzw. nach vorne geschoben werden. Bei der zusätzlichen Drehbewegung wird der Zapfen 4 dann innerhalb des zweiten Abschnitts geführt, wie aus Vergleich der Fig. 3 und 4 ersichtlich ist. In der gekuppelten Stellung, die in Fig. 4 gezeigt ist, befindet sich der Zapfen 4 dann im zweiten Abschnitt 14, nachdem eine manuelle Drehbewegung durchgeführt worden ist.

Wie die Figuren zeigen, hat der zweite Abschnitt 14 zum Befestigungsansatz 11 hin eine Öffnung 15. Die Nut 7 ist also einseitig offen. Durch diese Öffnung kann der Zapfen 4 von außen gesteckt und montiert werden. Die Öffnungsbreite der Öffnung 15 ist so breit ist, dass die Entriegelungshülse 3 auf dem Kupplungsteil 1 noch montierbar ist. Grundsätzlich kann sie etwas kleiner sein, so dass ein Rasteffekt beim Einführen des Zapfens 4 entsteht. Dies vereinfacht die Montage und erlaubt eine Vorfixierung bis ein anderes Anschlagelement 28 zum Einsatz kommt, das noch erläutert werden wird.

Weiterhin ist in den Figuren zu sehen, dass der zweite Abschnitt 14 in der Nähe der Öffnung 15 in axialer Richtung verbreitert ist, so dass der Zapfen 4 in der gekuppelten Stellung ein axiales Spiel hat. Dieses Spiel ist in Fig. 2 erkennbar.

Der Zapfen kann als ein am Außenumfang des Kupplungsteiles 1 befestigter, zum Beispiel einstückig angeformter, zylinderscheibenförmiger Zapfen ausgeführt sein. Andere Formen, wie eine Halbkugelform, sind jedoch auch denkbar. Auch kann der Zapfen ein Schraubenkopf einer auf das Kupplungsteil aufgeschraubten Schraube sein.

Zudem weist die Entriegelungshülse 3 im Bereich der Führungsnut 7 eine erste Strukturoberfläche 17 auf, wie in Fig. 4 leicht zu finden ist. Im Abstand dazu ist eine zweite ringförmige Strukturoberfläche 18 vorhanden. Beide Strukturoberflächen 17, 18 sind in einem Bereich mit vergrößertem Hülsendurchmesser und vorzugsweise auch vergrößerter Hülsenwandstärke angeordnet.

Die Schnittdarstellungen in Fig. 1 und 2 zeigen, dass das Kupplungsteil 1 einen in der gekuppelten Stellung zwischen (radial gesehen) der Entriegelungshülse 3 und dem Steckerteil 2 liegenden Verriegelungsabschnitt 20 umfasst. Dieser ist nur im Schnitt zu sehen. An diesem Abschnitt 20 sind die vorher erwähnten Rastkugeln 6 eingebettet ist, und zwar derart, dass sie radial nach innen herausragen, wie Fig. 1 und 2 zeigen.

Am Außenumfang des Steckerteils 2 ist die bereits erwähnte umlaufende Verriegelungsrille 21 angeformt, und zwar in einem vorderen Steckbereich. Diese Rille 21 dient dazu, dass die Rastkugeln 6 in der gekuppelten Stellung, wie sie in Fig. 2 gezeigt ist, formschlüssig greifen und das Steckerteil 2 halten.

Wird das Steckerteil 2 eingeschoben, dann bewegt sich das Ventil 5, so dass der vordere Teil des Steckerteils im Bereich der Kugeln 6 gelangt, wie ein Vergleich der Figuren 1 und 2 zeigt.

Außerdem steht die Entriegelungshülse 3 unter der Wirkung einer zweiten, an dem Kupplungsteil 1 abgestützten Druckfeder 16. In Fig. 1 ist diese Feder 16 zusammengedrückt, während in Fig. 2 die Feder 16 entspannt ist. Bei axialer Bewegung der Entriegelungshülse 1 entgegen der Federkraft der zweiten Druckfeder 16, wie sie für ein Entriegeln notwendig ist, sind die Rastkugeln 6 in einem abgeschrägten Kantenbereich 22 eines Hülsenendes 23 radial nach außen bewegbar. In Fig. 1 ist zu sehen, dass die gezeigte Kugel 6 an einer schrägen Fläche anliegt.
Bei einer weiteren axialen Bewegung der Kugel sieht man, dass diese eintauchen würde bzw. an der schrägen Fläche (abgeschrägten Kantenbereich 22) abrollen würde. Das Steckerteil kann daher ohne viel Widerstand eingesteckt werden. In dieser Stellung ist das Steckerteil 2 entriegelt.

Wie die Figuren also veranschaulichen, befindet sich die Entriegelungshülse 3 in der ungekuppelten Startstellung im hinteren Bereich der Kupplung 1, da im Inneren die Kugeln 6, die auch Verriegelungskugeln genannt werden können, vom federbelasteten Ventil 5 radial nach außen gedrückt werden und diese ein Vorschnellen der Entriegelungshülse 3 in die Verriegelungsstellung verhindern.

Beim Einkuppeln wird durch das Steckerteil 2 das Ventil 5 im Inneren der Kupplung zurückgeschoben und die Kugeln 6 so lange durch die eingeschobene Steckerkontur in der äußeren Position gehalten bis die Rille 21 des Steckerteils 2 auf die Kugeln 6 trifft. Die Rille 21 ist eine Verriegelungsrille.

Beim Einkuppeln wird durch das Steckerteil 2 das Ventil 5 im Inneren der Kupplung zurückgeschoben und die Kugeln 6 so lange durch die eingeschobene Steckerkontur in der äußeren Position gehalten, bis die Verriegelungsrille des Steckers 2 auf die Kugeln 6 trifft. Die Kugeln 6 werden dann durch die federbelastete Entriegelungshülse 3 in die Verriegelungsrille 21 des Steckerteils 2 gedrückt und geben dabei die Sperrung der Entriegelungshülse 3 auf. Die Entriegelungshülse 3 schnellt nach vorne und verriegelt die Kugeln 6 und damit das Steckerteil 2.

Zum Entkuppeln wird die Entriegelungshülse 3 axial nach hinten gezogen und entriegelt dabei die Kugeln 6. Das Steckerteil 2 wird dann vom federbelasteten Ventil 5 aus der Kupplung geschoben. In der Endstellung des Ventils 5 werden die Kugeln 6 nach außen gedrückt und verhindern wieder ein Vorschnellen der Entriegelungshülse 3 in die Verriegelungsstellung. Die Ausgangsstellung ist wieder erreicht.

Weiterhin ist die Vorrichtung vorzugsweise so ausgeführt, dass das Kupplungsteil 1 an einem dem Steckerteil 2 nahen Ende ein ringförmiges Anschlagelement 28 trägt. Dieses ist in einer Außennut 29 des Kupplungsteiles 1 eingebettet. In der gekuppelten Stellung gemäß Fig. 2 oder 4 liegt das Steckerteil 2 an einer Anschlagfläche 30 der Entriegelungshülse 3 an, und zwar an dem abgeschrägten Kantenbereich 22.

ZurAbdichtung ist an einer Innenfläche des Verriegelungsabschnitts eine weitere Rille 25 vorhanden. In dieser Rille 25 ist eine O-Ringdichtung 26 untergebracht. In der gekuppelten Stellung liegt die Dichtung 26 an einer radial nach innen gewölbten Außenkontur 27 des Steckerteiles 2 an, wie Fig. 2 zeigt.

Das Steckerteil 2 weist vorzugsweise ein Gewindeabschnitt 32 und ein Mutterteil 33 auf. Damit kann dann das Steckerteil 2 durch eine Öffnung gesteckt werden und mit Hilfe einer Kontermutter an einer Wandung oder dergleichen mit einer nicht gezeigten Kontermutter befestigt werden.

Die Erfindung ist nicht auf dieses Beispiel beschränkt, so kann die Schnellkupplungsvorrichtung auch für andere Gebiete eingesetzt werden, und zwar überall dort wo ein ungewolltes Entriegeln möglich ist. Auch können auch andere Rastmittel, Dichtungsanordnungen, Ventilanordnungen realisiert sein.

### Bezugszeichenliste

- 1: Kupplungsteil
- 2: Steckerteil
- 3: Entriegelungshülse
- 4: Führungselement
- 5: Ventil
- 6: Rastelement
- 7: Führungsnut
- 8: -
- 9: -
- 10: Schnellkupplungsvorrichtung
- 11: Befestigungsansatz
- 12: Erste Druckfeder
- 13: erster Abschnitt
- 14: zweiter Abschnitt
- 15: Öffnung
- 16: Zweite Druckfeder
- 17: Erste Strukturoberfläche
- 18: Zweite Strukturoberfläche
- 19: -
- 20: Verriegelungsabschnitt
- 21: Verriegelungsrille
- 22: Abgeschrägter Kantenbereich
- 23: Hülsenende
- 24: -
- 25: Zweite Rille
- 26: O-Ringdichtung
- 27: Außenkontur
- 28: Anschlagelement
- 29: Außennut
- 30: Anschlagfläche
- 31: -
- 32: Gewindeabschnitt
- 33: Mutterteil

## Patentansprüche

1. Schnellverschlusskupplung (10) zur Kupplung von Schlauch- und Rohrleitungen, insbesondere zur Verwendung bei der Formenkühlung, mit einem einen Befestigungsansatz (11) für Schläuche oder Rohre, ggf. mit einem Außen- oder Innengewinde, aufweisenden Kupplungsteil (1), der innerhalb einer Entriegelungshülse (3) axial verschiebbar gelagert ist, mit einem innerhalb der Entriegelungshülse (3) angeordneten Ventil (5), das innerhalb der Entriegelungshülse entgegen der Federkraft einer Druckfeder (12) durch ein Steckerteil (2) verschiebbar gelagert ist, wobei das Kupplungsteil (1) wenigstens ein Rastelement (6) zur Kupplung des Kupplungsteiles (1) an dem Steckerteil (2) umfasst, so dass das Kupplungsteil (1) mit dem Steckerteil (2) in einer gekuppelten Stellung fest gekuppelt ist und durch eine axiale Bewegung der Entriegelungshülse (3) das Steckerteil (2) entkuppelt wird, wobei die Entriegelungshülse (3) mit einer Führungsnut (7) versehen ist, die einen am Außenumfang des Kupplungsteils (1) befestigten zylinderscheibenförmigen Führungszapfen (4) derart führt, dass eine zusätzliche Drehbewegung der Entriegelungshülse (3) notwendig ist, um das Steckerteil (2) zu entriegeln, **dadurch gekennzeichnet, dass** die Führungsnut (7) aus einem axial verlaufenden ersten Abschnitt (13) besteht, derart dass in einer ungekuppelten Stellung zuerst die Hülse (3) axial verschoben werden muss, und aus einem hierzu schräg verlaufenden zweiten Abschnitt (14) besteht, durch die der Führungszapfen (4) geführt wird, wobei der Führungszapfen (4) bei der axialen Bewegung der Entriegelungshülse (3) innerhalb des ersten Abschnitts (13) bewegt wird und bei der zusätzlichen Drehbewegung innerhalb des zweiten Abschnitts (14) geführt wird, wobei durch den schräg verlaufenden zweiten Abschnitt (14) die Entriegelungshülse (3) zusätzlich zur Drehbewegung eine weitere axiale Bewegung ausführt, und dass der zweite Abschnitt (14) zum Befestigungsansatz (11) hin eine Öffnung (15) hat, durch die der Führungszapfen (4) von außen gesteckt werden kann, wobei einerseits die Öffnungsbreite der Öffnung (15) so breit ist, dass die Entriegelungshülse (3) auf dem Kupplungsteil (1) noch montierbar ist und andererseits der zweite Abschnitt (14) in der Nähe der Öffnung (15) in axialer Richtung verbreitert ist, so dass das Führungselement (4) in der gekuppelten Stellung ein weiteres axiales Spiel hat.

2. Schnellverschlusskupplung nach Anspruch 1, **dadurch gekennzeichnet, dass** das Führungselement (4) als eine am Außenumfang des Kupplungsteils (11) angeordnete Kugel oder Halbkugel ausgeführt ist.

3. Schnellverschlusskupplung nachAnspruch 1 oder 2, **dadurch gekennzeichnet, dass** die Entriegelungshülse (3) im Bereich der Führungsnut (7) eine erste Strukturoberfläche (17) aufweist und im Abstand dazu eine zweite ringförmige Strukturoberfläche (18) aufweist, wobei beide Strukturoberflächen (17, 18) in einem Bereich mit vergrößertem Hülsendurchmesser und vergrößerter Hülsenwandstärke angeordnet sind.

4. Schnellverschlusskupplung nach einem der vorhergehenden Ansprüche, **dadurch gekennzeichnet, dass** das Kupplungsteil (1) einen in der gekuppelten Stellung zwischen der Entriegelungshülse (3) und dem Steckerteil (2), radial gesehen, liegenden Verriegelungsabschnitt (20) umfasst, an dem mehrere Rastelemente, insbesondere Rastkugeln (6) eingebettet ist, so dass sie radial nach innen herausragen, wobei am Steckerteil (2) an dessen Außenumfang wenigstens eine Rastvertiefung (21) ausgebildet ist, die insbesondere als eine umlaufende Verriegelungsrille geformt ist, damit in der gekuppelten Stellung die Rastelemente (6) formschlüssig in der Rastvertiefung (21) greifen.

5. Schnellverschlusskupplung nach Anspruch 4, **dadurch gekennzeichnet, dass** an dem Verriegelungsabschnitt (20) an seiner Innenfläche eine Rille (25) geformt ist, in der eine O-Ringdichtung (26) liegt, die in der gekuppelten Stellung an einer radial nach innen gewölbten Außenkontur (27) des Steckerteiles (2) anliegt.

6. Schnellverschlusskupplung nach einem der vorhergehenden Ansprüche, **dadurch gekennzeichnet, dass** die Entriegelungshülse (3) unter der Wirkung einer zweiten, an dem Kupplungsteil (1) abgestützten Druckfeder (16) steht, so dass bei axialer Bewegung der Entriegelungshülse (3), entgegen der Federkraft der zweiten Druckfeder (16), die Rastelemente (6) in einem abgeschrägten Kantenbereich (22) eines Hülsenendes (23) radial nach außen bewegbar sind, wobei in dieser Stellung das Steckerteil (2) entriegelt ist.

7. Schnellverschlusskupplung nach einem der vorhergehenden Ansprüche, **dadurch gekennzeichnet, dass** das Kupplungsteil (1) an einem dem Steckerteil (2) nahen Ende ein ringförmiges Anschlagelement (28) trägt, welches in einer Außennut (29) des Kupplungsteiles (1) eingebettet ist und in der gekuppelten Stellung an einer Anschlagfläche (30) der Entriegelungshülse (3), insbesondere an einem abgeschrägten Kantenbereich (22), anliegt.

## Claims

1. A quick-closing coupling (10) for coupling hose and pipelines, or preferably for use in mould cooling with a coupling part (1) having a fastening neck (11) for hoses or pipes, if applicable with an outside or inside thread, which is mounted axially displaceable within an unlocking sleeve (3) with a valve (5) arranged within the unlocking sleeve (3) which within the unlocking sleeve is displaceably mounted against the spring force of a compression spring (12) through a connector part (2), wherein the coupling part (1) comprises at least one engagement element (6) for the coupling of the coupling part (1) to the connector part (2) so that the coupling part (1) with the connector part (2) is firmly coupled in a coupled position and the connector part (2) is uncoupled through an axial movement of the unlocking sleeve (3), wherein the unlocking sleeve (3) is provided with a guide slot (7) which guides a cylinder disc-shaped guide pin (4) fastened to the outer circumference of the coupling part (1) in such a manner that an additional rotary movement of the unlocking sleeve (3) is necessary in order to unlock the connector part (2), **characterized in that** the guide slot (7) consists of an axially orientated first section (13) in such a manner that in a non-coupled position the sleeve (3) first has to be displaced axially and consists of a second section (14) orientated obliquely to this through which the guide pin (4) is guided, wherein the guide pin (4) upon the axial movement of the unlocking sleeve (3) is moved within the first section (13) and upon the additional rotary movement is guided within the second section (14), wherein through the obliquely orientated second section (14) the unlocking sleeve (3) in addition to the rotary movement performs a further axial movement and that the second section (14) towards the fastening neck (11) has an opening (15) through which the guide pin (4) can be inserted from the outside, wherein on the one hand the opening width of the opening (15) is so wide that the unlocking sleeve (3) can still be mounted on to the coupling part (1) and on the other hand the second section (14) in the vicinity of the opening (15) is widened in axial direction so that the guide element (4) in the coupled position has a further axial play.

2. The quick-closing coupling, according to Claim 1, **characterized in that** the guide element (4) is embodied as a sphere or hemisphere arranged on the outer circumference of the coupling part (11).

3. The quick-closing coupling according to Claim 1 or 2, **characterized in that** the unlocking sleeve (3) in the region of the guide slot (7) comprises a first textured surface (17) and spaced from this comprises a second ring-shaped textured surface (18), wherein both textured surfaces (17, 18) are arranged in a region with enlarged sleeve diameter and enlarged sleeve wall thickness.

4. The quick-closing coupling according to any one of the preceding claims, **characterized in that** the coupling part (1) comprises a locking section (20) located in the coupled position between the unlocking sleeve (3) and the connector part (2), viewed radially, on which a plurality of engagement elements, more preferably engagement balls (6) are embedded so that they radially protrude to the inside, wherein on the connector part (2) on its outer circumference at least one engagement depression (21) is formed which more preferably is formed as a circumferential locking groove so that in the coupled position the engagement elements (6) positively engage in the engagement depression (21).

5. The quick-closing coupling according to Claim 4, **characterized in that** on the locking section (20) on its inner surface a groove (25) is formed in which an O-ring seal (26) is located which in the coupled position abuts an outer contour (27) of the connector part (2) curved radially to the inside.

6. The quick-closing coupling according to any one of the preceding claims, **characterized in that** the unlocking sleeve (3) is subjected to the effect of a second compression spring (16) supported on the coupling part (1) so that upon axial movement of the unlocking sleeve (3) against the spring force of the second compression spring (16) the engagement elements (6) in a bevelled edge region (22) of a sleeve end (23) can be moved radially to the outside, wherein in this position the connector part (2) is unlocked.

7. The quick-closing coupling according to any one of the preceding claims, **characterized in that** the coupling part (1) on an end near the connector part (2) carries a ring-shaped stop element (28) which is embedded in an outer slot (29) of the coupling part (1) and in the coupled position abuts a stop surface (30) of the unlocking sleeve (3), more preferably a bevelled edge region (22).

## Revendications

1. Accouplement à fermeture rapide (10) pour coupler des flexibles et des tuyaux, en particulier pour l'utilisation dans le refroidissement des moules, comprenant une pièce d'accouplement (1) présentant une saillie de fixation (11) pour des flexibles ou des tuyaux, le cas échéant avec un filetage extérieur ou intérieur, qui est placée de manière mobile axialement dans une douille de déverrouillage (3), avec un clapet (5) placé à l'intérieur de la douille de déverrouillage (3), qui est placé à l'intérieur de la douille de déverrouillage (3) de manière à pouvoir être déplacé à travers une pièce de connecteur (2) contre la tension de ressort d'un ressort de compression (12), la pièce d'accouplement (1) comprenant au moins un élément d'encliquetage (6) pour coupler la pièce d'accouplement (1) sur la pièce de connecteur (2), de façon à ce que la pièce d'accouplement (1) soit couplée fixement à la pièce de connecteur (2) dans une position couplée et que la pièce de connecteur (2) soit désaccouplée par un mouvement axial de la douille de déverrouillage (3), sachant que la douille de déverrouillage (3) est munie d'une rainure de guidage (7) qui conduit un tenon de guidage (4) en forme de rondelle fixé sur le pourtour extérieur de la pièce d'accouplement (1) de telle manière qu'un mouvement de rotation supplémentaire de la douille de déverrouillage (3) est indispensable pour déverrouiller la pièce de connecteur (2), **caractérisé en ce que** la rainure de guidage (7) est composée d'une première section axiale (13), de telle manière que dans une position désaccouplée, la douille (3) doit d'abord être déplacée axialement, et d'une deuxième section (14) en biais par rapport à celle-ci au travers de laquelle le tenon de guidage (4) est dirigé, le tenon de guidage (4) étant déplacé à l'intérieur de la première section (13) par le mouvement axial de la douille de déverrouillage (3) et dirigé à l'intérieur de la deuxième section (14) lors du mouvement de rotation supplémentaire, ce par quoi, par la deuxième section (14) en biais, la douille de déverrouillage (3) effectue en plus un mouvement axial supplémentaire pour le mouvement de rotation, et que la deuxième section (14) a une ouverture (15) en direction de la saillie de fixation (11), par laquelle le tenon de guidage (4) peut être inséré par l'extérieur, sachant que d'une part la largeur d'ouverture de l'ouverture (15) est telle que la douille de déverrouillage (3) peut être encore montée sur la pièce d'accouplement (1) et que d'autre part la deuxième section (14) est élargie dans le sens axial à proximité de l'ouverture (15), de façon à ce que l'élément de guidage (4) ait un jeu axial supplémentaire dans la position couplée.

2. Accouplement à fermeture rapide selon la revendication 1, **caractérisé en ce que** l'élément de guidage (4) est une sphère ou une demi-sphère placée sur le pourtour extérieur de la pièce d'accouplement (11).

3. Accouplement à fermeture rapide selon la revendication 1 ou 2, **caractérisé en ce que** la douille de déverrouillage (3) présente une première surface structurée (17) au niveau de la rainure de guidage (7) et à distance de celle-ci, une deuxième surface structurée (18) annulaire, les deux surfaces structurées (17, 18) étant placées dans une partie avec un diamètre de douille agrandi et une épaisseur de paroi de douille agrandie.

4. Accouplement à fermeture rapide selon l'une des revendications précédentes, **caractérisé en ce que** la pièce d'accouplement (1) comprend une section de verrouillage (20) prévue dans la position couplée entre la douille de déverrouillage (3) et la pièce de connecteur (2), sur laquelle plusieurs éléments d'encliquetage, en particulier des boules d'encliquetage (6) sont encastrées de façon à ce qu'elles fassent saillie radialement vers l'intérieur, sachant que sur la pièce de connecteur (2) au moins un évidement d'encliquetage (21) est formé sur son pourtour extérieur, lequel évidement est formé en particulier comme cannelure de verrouillage périphérique afin que dans la position accouplée, les éléments d'encliquetage (6) se mettent en prise par complémentarité de forme dans l'évidement d'encliquetage (21).

5. Accouplement à fermeture rapide selon la revendication 4, **caractérisé en ce que** sur la face intérieure de la section de verrouillage (20) une cannelure (25) est formée dans laquelle repose un joint torique (26) qui s'appuie en position couplée sur un contour extérieur (27) de la pièce de connecteur (2) bombé radialement vers l'intérieur.

6. Accouplement à fermeture rapide selon l'une des revendications précédentes, **caractérisé en ce que** la douille de déverrouillage (3) subit l'action d'un deuxième ressort de compression (16) appuyé sur la pièce d'accouplement (1), de façon à ce que lors d'un mouvement axial de la douille de déverrouillage (3), contre la tension de ressort du deuxième ressort de compression (16), les éléments d'encliquetage (6) puissent être déplacés radialement vers l'extérieur dans une zone d'arête (22) biseautée d'une extrémité de douille (23), sachant que dans cette position, la pièce de connecteur (2) est déverrouillée.

7. Accouplement à fermeture rapide selon l'une des revendications précédentes, **caractérisé en ce que** la pièce d'accouplement (1) supporte un élément de butée (28) annulaire sur une extrémité proche de la pièce de connecteur (2), lequel est encastré dans une rainure extérieure (29) de la pièce d'accouplement (1) et dans la position couplée, s'appuie sur une face de butée (30) de la douille de déverrouillage (3), en particulier sur une zone d'arête (22) biseautée.
